# EUROPÄISCHE PATENTSCHRIFT

(11) **EP 3 495 792 B1**
(45) Veröffentlichungstag und Bekanntmachung des Hinweises auf die Patenterteilung: **03.02.2021**
(21) Anmeldenummer: 17206162.4
(22) Anmeldetag: 08.12.2017
(51) Int. Cl.: G01L 3/10

(54) **VORRICHTUNG UND VERFAHREN ZUR KOMPENSATION VON FREMDFELDERN BEI DER MAGNETOSTRIKTIVEN DREHMOMENTMESSUNG**
DEVICE AND METHOD FOR COMPENSATING FOR EXTERNAL FIELDS IN MAGNETOSTRICTIVE TORQUE MEASUREMENT
DISPOSITIF ET PROCÉDÉ DE COMPENSATION DE CHAMPS PARASITES LORS DE LA MESURE DU COUPLE DE ROTATION MAGNÉTOSTRICTIF

(43) Veröffentlichungstag der Anmeldung: 12.06.2019
(73) Patentinhaber: NCTE AG, 82041 Oberhaching (DE)
(72) Erfinder: Eckschlager, Florian, 85521 Hohenbrunn (DE)
(74) Vertreter: Grünecker Patent- und Rechtsanwälte PartG mbB

(56) Entgegenhaltungen:
- US-A- 5 509 314
- US-A1- 2010 242 626

## Beschreibung

### Gebiet der Erfindung

Die Erfindung betrifft eine Drehmomentsensoranordnung zur Erfassung des Drehmoments an wenigstens zwei Wellen in einer Wellenanordnung.

### Stand der Technik

Stand der Technik bei der Messung von Magnetfeldänderung durch Drehmoment auf Basis der Magnetostriktion ist der Einsatz von Messspulen. Diese werden berührungslos in Relation zur einer magnetisch codierten Messwelle angebracht (parallel zur Drehachse) und erfassen Magnetfeldänderungen, die auf Grund des magnetoelastischen Effekts unter Last (inverse Magnetostriktion) auftreten. Die Magnetfeldänderung ist direkt proportional zur äußeren Krafteinwirkung und stellt den Zusammenhang mit dem Drehmoment her.

In Anwendungen, bei denen zwei oder mehr Wellen mit einem magnetostriktiven Drehmomentsensor versehen sind und die benachbart angeordnet sind, ist festzustellen, dass bei zwei nahe nebeneinander liegenden Wellen ein Übersprechen von einer zur anderen Welle sichtbar ist. Dadurch ergibt sich eine Verfälschung des Messergebnisses aufgrund des störenden Einflusses des benachbarten Magnetfeldes eines benachbarten Sensors.

US 2010/0242626 A1 offenbart ein Drehmomentsensorsystem mit einer bereichsweise magnetisierten Welle. Ein aktiver Magnetfeldsensor misst den magnetischen Fluss bei Anliegen eines Drehmoments. Wenigstens ein passiver Magnetfeldsensor ist seitlich in axialer Richtung entlang der Wellenachse versetzt vom aktiven Sensor angeordnet. Der passive Sensor ist weit genug vom aktiven Sensor entfernt, so dass der gemessene magnetische Fluss nicht vom anlegenden Drehmoment abhängt. Ein unerwünschter magnetischer Fluss kann so herausgerechnet werden. Bei Anliegen von Drehmoment misst nur der aktive Sensor das dadurch erzeugte Magnetfeld. Magnetische Flussvariationen, die vom passiven Sensor erfasst werden, sind solche, die durch interferierende Magnetfeldquellen erzeugt werden. Die interferierenden Magnetfelder werden in Fernfelder und Nahfelder unterschieden. Wenn es sich um ein Fernfeld handelt, dann messen alle Sensoren das gleiche interferierende Magnetfeld. Wenn es sich um ein Nahfeld handelt, werden die Sensoren so platziert, dass die Ausgabe des aktiven Sensors gleich einem Mittelwert von beiden passiven Sensoren ist, um eine Kompensation zu bewirken. Es sind zwar Anordnungen mit nur einem passiven Sensor gezeigt, jedoch betreffen diese ausdrücklich den Fall, wenn der aktive Sensor vor dem Einfluss von Nahfeldern geschützt ist.

Angesichts dieser Nachteile ist es Aufgabe der vorliegenden Erfindung, die Messgenauigkeit für benachbarte Drehmomentsensoren zu verbessern.

### Beschreibung der Erfindung

Der Erfindung liegt die Aufgabe zugrunde, die genannten Nachteile zumindest teilweise auszuräumen, insbesondere den störenden Einfluss des gegenüberliegenden (fremden) Feldes zu kompensieren.

Diese Aufgabe wird durch eine Drehmomentsensoranordnung nach Anspruch 1 gelöst.

Auf diese Weise können vom zweiten magnetisierten Bereich erzeugte Magnetfelder am Ort des ersten Magnetfeldsensors, welche die Messung des ersten Drehmomentsensors stören, kompensiert werden. Das Kompensationselement ist dabei an einer Position angeordnet sein, an der die Größe des Magnetfeldes vom zweiten magnetisierten Bereich gleich der Größe des Störmagnetfeldes an der Position des ersten Magnetfeldsensors ist. Das Kompensationselement ist vorzugsweise ein Kompensations-Magnetfeldsensor.

Eine Weiterbildung besteht darin, dass der Abstand des ersten Kompensationselements von dem ersten magnetisierten Bereich maximiert wird. Gemäß einer anderen Weiterbildung können der erste magnetisierte Bereich der ersten Welle und der zweite magnetisierte Bereich der zweiten Welle auf einer von der ersten Welle ausgehenden radialen Linie liegen; und der erste magnetisierte Bereich der ersten Welle und der erste Magnetfeldsensor können auf einer von der ersten Welle ausgehenden radialen Linie liegen. Dies stellt eine einfache Anordnung der magnetisierten Bereiche und der Magnetfeldsensoren dar, bei der die magnetisierten Bereiche der Wellen gegenüber voneinander angeordnet sind.

Eine andere Weiterbildung besteht darin, dass der erste Magnetfeldsensor eine Messspule umfasst und/oder wobei der zweite Magnetfeldsensor eine Messspule umfasst und/oder wobei das Kompensationselement eine Kompensationsspule umfasst. Spulen sind einfache Elemente zur Messung einer Magnetfeldänderung.

Eine andere Weiterbildung besteht darin, dass der erste magnetisierte Bereich der ersten Welle zwei magnetisierte Teilbereiche umfasst, die zueinander gegenläufig in Umfangsrichtung magnetisiert sind, und der erste Magnetfeldsensor zwei Messspulen umfasst, die zur Messung eines Magnetfeldes des jeweiligen magnetisierten Teilbereichs vorgesehen sind. Die verbessert die Messgenauigkeit indem eine Differenzmessung der beiden Teilbereiche durchgeführt wird.

Dies kann dahingehend weitergebildet werden, dass das Kompensationselement zwei Kompensationsspulen zur Kompensation des Störeinflusses des zweiten magnetisierten Bereichs auf die jeweilige Messspule umfasst.

Gemäß einer anderen Weiterbildung kann in der Wellenanordnung die zweite Welle unmittelbar benachbart zur ersten Welle sein. Dadurch ergibt sich eine kompakte Anordnung der Wellen, wobei die Kompensation der Störeinflüsse des magnetisierten Bereichs der direkt benachbarten Welle erfolgt.

Eine andere Weiterbildung besteht darin, dass jedes Kompensationselement in Reihe mit der jeweiligen Messspule verschaltet ist, und wobei jede Kompensationsspule in Bezug auf eine induzierte Spannung gegenläufig zur jeweiligen Messspule angeordnet ist. Dadurch kann die Kompensation auf einfache Weise durchgeführt werden und führt unmittelbar zu einem korrigierten Messsignal der Messspulen.

Gemäß einer anderen Weiterbildung umfasst die Drehmomentsensoranordnung weiterhin einen weiteren ersten Magnetfeldsensor zur Messung des vom ersten magnetisierten Bereich erzeugten Magnetfeldes, wobei das Kompensationselement zur Kompensation des Störeinflusses des zweiten magnetisierten Bereichs auf beide ersten Magnetfeldsensoren vorgesehen ist. Diese Maßnahme erhöht die Messgenauigkeit der Drehmomentmessung an der ersten Welle.

Dies kann dahingehend weitergebildet werden, dass das Kompensationselement so angeordnet ist, dass das von dem zweiten magnetisierten Bereich erzeugte Magnetfeld an der Position des Kompensationselements im Bereich von 90% bis 110% des Mittelwerts aus den von dem zweiten magnetisierten Bereich erzeugten Magnetfeldern an den Positionen der beiden ersten Magnetfeldsensoren ist.

Die oben genannte Aufgabe wird ebenfalls gelöst durch ein Verfahren zur Erfassung des Drehmoments an wenigstens zwei Wellen in einer Wellenanordnung gemäß Anspruch 10.

Die Vorteile des erfindungsgemäßen Verfahrens entsprechen den oben genannten Vorteilen des erfindungsgemäßen Drehmomentsensors.

Die genannten Weiterbildungen können einzeln eingesetzt oder wie beansprucht geeignet miteinander kombiniert werden.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.

### Kurzbeschreibung der Zeichnungen

- Fig. 1A, 1B: zeigt eine Ausführungsform des erfindungsgemäßen Drehmomentsensors.
- Fig. 2: zeigt einen Ausschnitt einer zweiten Ausführungsform des erfindungsgemäßen Drehmomentsensors.

### Ausführungsformen

Nachdem festgestellt wurde, dass bei zwei nahe nebeneinander liegenden Wellen ein Übersprechen der Magnetfelder von einer zur anderen Welle sichtbar ist, wurden Versuche zur Kompensation des gegenüberliegenden (fremden) Feldes gemacht. Dies soll durch eine bestimmte Positionierung und Anordnung zusätzlicher Messspulen erreicht werden.

Es werden zu jeder vorhandenen Messspule je eine weitere Spule hinzugefügt. Diese werden jeweils genauso in Reihe, jedoch in Bezug auf die jeweilige bereits vorhandene Messspule invertiert verdrahtet. Dadurch soll erreicht werden, dass Fremdfelder, welche die vorhandene Messspule beeinflussen, durch die neue Spule kompensiert werden. Um das eigentlich zu messende Feld dennoch auswerten zu können ist eine spezielle geometrische Anordnung aller Spulen notwendig.

Die Spulen zur Kompensation werden so angeordnet, dass sie, bezogen auf den Mittelpunkt der gegenüberliegenden Welle, auf dem gleichen Radius wie die eigentliche Messspule liegt. Außerdem wird darauf geachtet, dass der Abstand der Kompensationsspule zur Messwelle möglichst groß ist. Damit wird der negative Einfluss des Messsignals auf die Kompensationsspule so weit wie möglich reduziert. Da der Abstand von Messspule und Kompensationsspule zur gegenüberliegenden Welle dabei gleich bleibt (gleicher Radius) wird das fremde Feld ausgelöscht. Es hat sich herausgestellt, dass der Einfluss auf zwei benachbarte Messspulen auch durch eine einzige, invertiert verschaltete Kompensationsspule kompensiert werden kann.

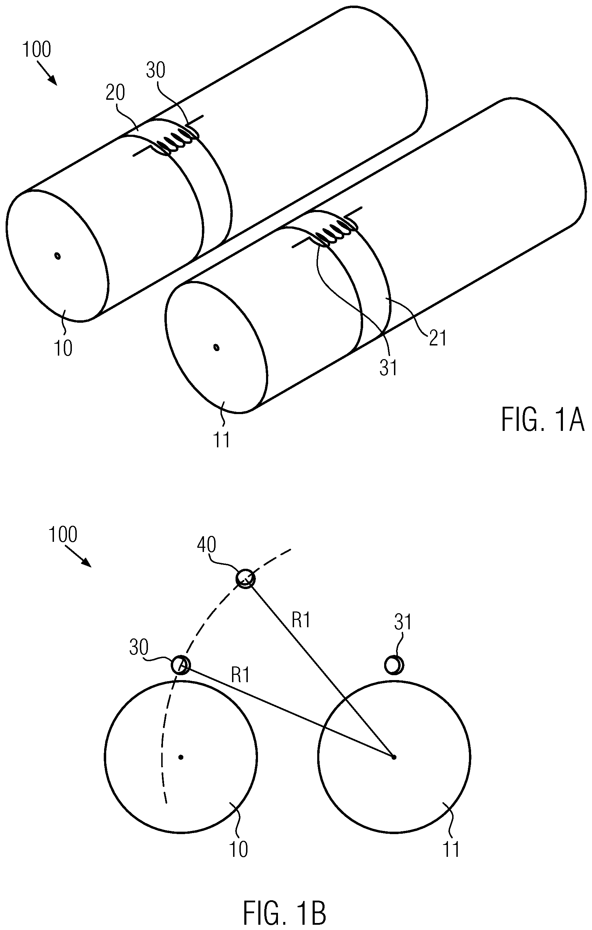

In Fig. 1A, 1B ist eine Ausführungsform 100 der erfindungsgemäßen Drehmomentsensoranordnung dargestellt, wobei Fig. 1B eine Sicht entlang der Wellen zeigt.

Die erfindungsgemäße Drehmomentsensoranordnung 100 zur Erfassung des Drehmoments an wenigstens zwei Wellen in einer Wellenanordnung umfasst in dieser Ausführungsform eine erste und eine zweite Welle 10, 11 der Wellenanordnung, wobei die erste und die zweite Welle 10, 11 vorzugsweise parallel zueinander angeordnet sind; einen ersten magnetoelastischen Drehmomentsensor 20, 30 zur Messung des Drehmoments an der ersten Welle 10, wobei der erste Drehmomentsensor einen ersten magnetisierten Bereich 20 der ersten Welle 10 und einen ersten Magnetfeldsensor 30 zur Messung eines durch den ersten magnetisierten Bereich 20 erzeugten Magnetfeldes umfasst; einen zweiten magnetoelastischen Drehmomentsensor 21, 31 zur Messung des Drehmoments an der zweiten Welle 11, wobei der zweite Drehmomentsensor einen zweiten magnetisierten Bereich 21 der zweiten Welle 11 und einen zweiten Magnetfeldsensor 31 zur Messung eines durch den zweiten magnetisierten Bereich 21 erzeugten Magnetfeldes umfasst; und ein erstes Kompensationselement 40 zur wenigstens teilweisen Kompensation eines Störeinflusses des zweiten magnetisierten Bereichs 21 der zweiten Welle 11 auf die Drehmomentmessung des ersten Drehmomentsensors 20, 30.

Der Abstand des ersten Kompensationselements 40 von dem zweiten magnetisierten Bereich 21 der zweiten Welle 11 ist gleich dem Abstand des ersten Magnetfeldsensors 30 von dem zweiten magnetisierten Bereich 21 der zweiten Welle 11. Dadurch wird die Messung des Störmagnetfeldes im gleichen Abstand durchgeführt bei dem auch der störende Einfluss auf den ersten Magnetfeldsensor erfolgt. Nachdem die Magnetfeldstärke radial abfällt erhält man somit eine Messung des Störmagnetfeldes mit im Wesentlichen gleicher Stärke.

Auf diese Weise können vom zweiten magnetisierten Bereich 21 erzeugte Magnetfelder am Ort des ersten Magnetfeldsensors 30, welche die Messung des ersten Drehmomentsensors stören, kompensiert werden. Das Kompensationselement 40 ist also an einer Position angeordnet, an der die Größe des Magnetfeldes vom zweiten magnetisierten Bereich 21 gleich der Größe des Störmagnetfeldes an der Position des ersten Magnetfeldsensors 30 ist. Das Kompensationselement 30 ist vorzugsweise ein Kompensations-Magnetfeldsensor.

Der erste Magnetfeldsensor umfasst in dieser Ausführungsform eine Messspule 30, der zweite Magnetfeldsensor eine Messspule 31 und das Kompensationselement eine Kompensationsspule 40.

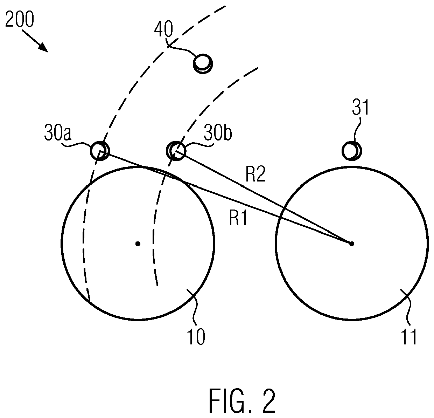

Fig. 2 zeigt eine zweite Ausführungsform 200 der erfindungsgemäßen Drehmomentsensoranordnung.

Dabei umfasst die Drehmomentsensoranordnung weiterhin einen weiteren ersten Magnetfeldsensor 30b zur Messung des vom ersten magnetisierten Bereich 20 erzeugten Magnetfeldes, wobei das Kompensationselement 40 zur Kompensation des Störeinflusses des zweiten magnetisierten Bereichs 21 auf beide ersten Magnetfeldsensoren 30a, 30b vorgesehen ist.

Zur Bestimmung der Position des Kompensationselements 40 muss zusätzlich die Abnahme des Magnetfelds über den Abstand x zur Welle beachtet werden. Zur Abnahme des Feldes kann im Wesentlichen der Faktor x^(-3) angenommen werden. Entscheidend ist der Grad der Abnahme des Magnetfeldes durch den Raum. Der absolute Betrag ist dabei nicht von Bedeutung. Prinzipiell kann das Magnetfeld um die Welle als radialsymmetrisch angenommen werden. Durch die benachbarte Welle wird dieses Feld jedoch verformt. Dies macht die Berechnung des exakten Feldes im Raum komplizierter.

Aus verschiedenen Versuchen hat sich gezeigt, dass sich über den Mittelwert der beiden Feldstärken an den Position der Messspulen 30a und 30b die beim Kompensationselement 40 benötigte Feldstärke näherungsweise bestimmen lässt. Aus dieser Feldstärke lässt sich über die x^(-3) Abschwächung des Magnetfeldes ein Abstand von der zweiten Welle 11 bestimmen bei dem das Kompensationselement 40 angeordnet wird. Dieser so bestimmte Abstand kann durch geringfügige Verschiebung optimiert werden, um eine möglichst exakte Kompensation zu bewirken.

Die dargestellten Ausführungsformen sind lediglich beispielhaft und der vollständige Umfang der vorliegenden Erfindung wird durch die Ansprüche definiert.

## Patentansprüche

1. Drehmomentsensoranordnung (100) zur Erfassung des Drehmoments an wenigstens zwei Wellen (10, 11) in einer Wellenanordnung, umfassend:
eine erste und eine zweite Welle (10, 11) der Wellenanordnung, wobei die erste und die zweite Welle (10, 11) parallel zueinander angeordnet sind;
einen ersten magnetoelastischen Drehmomentsensor (20, 30) zur Messung des Drehmoments an der ersten Welle (10), wobei der erste Drehmomentsensor einen ersten magnetisierten Bereich (20) entlang eines Umfangs der ersten Welle (10) und einen ersten Magnetfeldsensor (30) zur Messung eines durch den ersten magnetisierten Bereich (20) erzeugten Magnetfeldes umfasst;
einen zweiten magnetoelastischen Drehmomentsensor (21, 31) zur Messung des Drehmoments an der zweiten Welle (11), wobei der zweite Drehmomentsensor einen zweiten magnetisierten Bereich (21) entlang eines Umfangs der zweiten Welle (11) und einen zweiten Magnetfeldsensor (31) zur Messung eines durch den zweiten magnetisierten Bereich (21) erzeugten Magnetfeldes umfasst; und
ein erstes Kompensationselement (40), insbesondere ein erster Kompensations-Magnetfeldsensor, zur wenigstens teilweisen Kompensation eines Störeinflusses des zweiten magnetisierten Bereichs (21) der zweiten Welle (11) auf die Drehmomentmessung des ersten Drehmomentsensors (20, 30);
wobei der radiale Abstand (R1) des ersten Kompensationselements (40) von dem zweiten magnetisierten Bereich (21) der zweiten Welle (11) gleich dem radialen Abstand (R1) des ersten Magnetfeldsensors (30) von dem zweiten magnetisierten Bereich (21) der zweiten Welle (11) ist; und
wobei der radiale Abstand des ersten Kompensationselements (40) von dem ersten magnetisierten Bereich (20) der ersten Welle (10) größer ist als der radiale Abstand des ersten Magnetfeldsensors (30) von dem ersten magnetisierten Bereich (20) der ersten Welle (10).

2. Drehmomentsensoranordnung nach Anspruch 1, wobei der Abstand des ersten Kompensationselements (40) von dem ersten magnetisierten Bereich (20) maximiert wird.

3. Drehmomentsensoranordnung nach einem der Ansprüche 1 bis 2, wobei der erste magnetisierte Bereich (20) der ersten Welle (10) und der zweite magnetisierte Bereich der zweiten Welle auf einer von der ersten Welle ausgehenden radialen Linie liegen; und wobei der erste magnetisierte Bereich der ersten Welle und der erste Magnetfeldsensor auf einer von der ersten Welle ausgehenden radialen Linie liegen.

4. Drehmomentsensoranordnung nach einem der Ansprüche 1 bis 3, wobei der erste Magnetfeldsensor (30) eine Messspule umfasst und/oder wobei der zweite Magnetfeldsensor (31) eine Messspule umfasst und/oder wobei das Kompensationselement (40) eine Kompensationsspule umfasst.

5. Drehmomentsensoranordnung nach einem der Ansprüche 1 bis 4, wobei der erste magnetisierte Bereich der ersten Welle zwei magnetisierte Teilbereiche umfasst, die zueinander gegenläufig in Umfangsrichtung magnetisiert sind, und der erste Magnetfeldsensor zwei Messspulen umfasst, die zur Messung eines Magnetfeldes des jeweiligen magnetisierten Teilbereichs vorgesehen sind.

6. Drehmomentsensoranordnung nach Anspruch 5, wobei das Kompensationselement zwei Kompensationsspulen zur Kompensation des Störeinflusses des zweiten magnetisierten Bereichs auf die jeweilige Messspule umfasst.

7. Drehmomentsensoranordnung nach Anspruch 6, wobei jede Kompensationsspule in Reihe mit der jeweiligen Messspule verschaltet ist, und wobei jede Kompensationsspule in Bezug auf eine induzierte Spannung gegenläufig zur jeweiligen Messspule angeordnet ist.

8. Drehmomentsensoranordnung nach einem der Ansprüche 1 bis 7, weiterhin einen weiteren ersten Magnetfeldsensor zur Messung des vom ersten magnetisierten Bereich erzeugten Magnetfeldes umfassend, wobei das Kompensationselement zur Kompensation des Störeinflusses des zweiten magnetisierten Bereichs auf beide ersten Magnetfeldsensoren vorgesehen ist.

9. Drehmomentsensoranordnung nach Anspruch 8, wobei das Kompensationselement so angeordnet ist, dass das von dem zweiten magnetisierten Bereich erzeugte Magnetfeld an der Position des Kompensationselements im Bereich von 90% bis 110% des Mittelwerts aus den von dem zweiten magnetisierten Bereich erzeugten Magnetfeldern an den Positionen der beiden ersten Magnetfeldsensoren ist.

10. Verfahren zur Erfassung des Drehmoments mit einer Drehmomentsensoranordnung (100) gemäß einem der Ansprüche 1 bis 9, wobei das Verfahren umfasst:
Messen des Drehmoments an der ersten Welle (10) mit dem ersten magnetoelastischen Drehmomentsensor (20, 30);
Messen des Drehmoments an der zweiten Welle (11) mit dem zweiten magnetoelastischen Drehmomentsensor (21, 31); und
wenigstens teilweises Kompensieren eines Störeinflusses des zweiten magnetisierten Bereichs (21) der zweiten Welle (11) auf die Drehmomentmessung des ersten Drehmomentsensors (20, 30) mit dem ersten Kompensationselement (40).

## Claims

1. A torque sensor assembly (100) for detecting torque on at least two shafts (10, 11) in a shaft assembly, comprising:
a first and a second shaft (10, 11) of the shaft assembly, wherein the first and the second shaft (10, 11) are arranged in parallel to each other;
a first magneto elastic torque sensor (20, 30) for measuring the torque on the first shaft (10), wherein the first torque sensor comprises a first magnetized region (20) along a circumference of the first shaft (10), and a first magnetic field sensor (30) for measuring a magnetic field generated by the first magnetized region (20);
a second magneto elastic torque sensor (21, 31) for measuring the torque on the second shaft (11), wherein the second torque sensor comprises a second magnetized region (21) along a circumference of the second shaft (11), and a second magnetic field sensor (31) for measuring a magnetic field generated by the second magnetized region (21); and
a first compensation element (40), in particular a first compensation magnetic field sensor, for at least partially compensating an interference of the second magnetized region (21) of the second shaft (11) on the torque measurement of the first torque sensor (20, 30);
wherein the radial distance (R1) of the first compensation element (40) from the second magnetized region (21) of the second shaft (11) is equal to the radial distance (R1) of the first magnetic field sensor (30) from the second magnetized region (21) of the second shaft (11); and
wherein the radial distance of the first compensation element (40) from the first magnetized region (20) of the first shaft (10) is greater than the radial distance of the first magnetic field sensor (30) from the first magnetized region (20) of the first shaft (10).

2. The torque sensor assembly according to claim 1, wherein the distance of the first compensation element (40) from the first magnetized region (20) is maximized.

3. The torque sensor assembly according to any one of claims 1 to 2, wherein the first magnetized region (20) of the first shaft (10) and the second magnetized region of the second shaft are located on a radial line extending from the first shaft; and wherein the first magnetized region of the first shaft and the first magnetic field sensor are located on a radial line extending from the first shaft.

4. The torque sensor assembly according to any one of claims 1 to 3, wherein the first magnetic field sensor (30) comprises a measuring coil and/or wherein the second magnetic field sensor (31) comprises a measuring coil and/or wherein the compensation element (40) comprises a compensation coil.

5. The torque sensor assembly according to any one of the claims 1 to 4, wherein the first magnetized region of the first shaft comprises two magnetized partial regions which are magnetized in a counter rotating manner to one another in the circumferential direction, and the first magnetic field sensor comprises two measuring coils which are provided for measuring a magnetic field of the respective magnetized partial region.

6. The torque sensor assembly according to claim 5, wherein the compensation element comprises two compensation coils for compensating the interference of the second magnetized region on the respective measuring coil.

7. The torque sensor assembly according to claim 6, wherein each compensation coil is connected in series to the respective measuring coil, and wherein each compensation coil is arranged in a counter rotating manner to the respective measuring coil with respect to an induced voltage.

8. The torque sensor assembly according to any one of claims 1 to 7, further comprising another first magnetic field sensor for measuring the magnetic field generated by the first magnetized region, wherein the compensation element is provided for compensation of the interference of the second magnetized region on both first magnetic field sensors.

9. The torque sensor assembly according to claim 8, wherein the compensation element is arranged such that the magnetic field generated by the second magnetized region at the position of the compensation element is in the range of 90% to 110% of the mean value from the magnetic fields generated by the second magnetized region at the positions of the two first magnetic field sensors.

10. A method of detecting torque with a torque sensor assembly (100) according to any one of claims 1 to 9, the method comprising:
measuring the torque at the first shaft (10) with the first magneto elastic torque sensor (20, 30);
measuring the torque on the second shaft (11) with the second magneto elastic torque sensor (21, 31); and
at least partially compensating an interference of the second magnetized region (21) of the second shaft (11) on the torque measurement of the first torque sensor (20, 30) with the first compensation element (40).

## Revendications

1. Agencement de capteurs de couple (100) permettant de détecter le couple au niveau d'au moins deux arbres (10, 11) au sein d'un agencement d'arbres, comprenant :
des premier et second arbres (10, 11) de l'agencement d'arbres, dans lequel les premier et second arbres (10, 11) sont agencés parallèlement l'un à l'autre ;
un premier capteur de couple magnétoélastique (20, 30) permettant de mesurer le couple au niveau du premier arbre (10), dans lequel le premier capteur de couple comprend une première région magnétisée (20) le long d'une circonférence du premier arbre (10) et un premier capteur de champ magnétique (30) permettant de mesurer un champ magnétique généré par la première région magnétisée (20) ;
un second capteur de couple magnétoélastique (21, 31) permettant de mesurer le couple au niveau du second arbre (11), dans lequel le second capteur de couple comprend une seconde région magnétisée (21) le long d'une circonférence du second arbre (11) et un second capteur de champ magnétique (31) permettant de mesurer un champ magnétique généré par la seconde région magnétisée (21) ; et
un premier élément de compensation (40), en particulier un premier capteur de champ magnétique de compensation, permettant une compensation au moins partielle d'une influence perturbatrice de la seconde région magnétisée (21) du second arbre (11) sur la mesure de couple du premier capteur de couple (20, 30) ;
dans lequel la distance radiale (R1) entre le premier élément de compensation (40) et la seconde région magnétisée (21) du second arbre (11) est égale à la distance radiale (R1) entre le premier capteur de champ magnétique (30) et la seconde région magnétisée (21) du second arbre (11) ; et
dans lequel la distance radiale entre le premier élément de compensation (40) et la première région magnétisée (20) du premier arbre (10) est supérieure à la distance radiale entre le premier capteur de champ magnétique (30) et la première région magnétisée (20) du premier arbre (10).

2. Agencement de capteurs de couple selon la revendication 1, dans lequel la distance entre le premier élément de compensation (40) et la première région magnétisée (20) est maximisée.

3. Agencement de capteurs de couple selon la revendication 1 ou 2, dans lequel la première région magnétisée (20) du premier arbre (10) et la seconde région magnétisée du second arbre se trouvent sur une ligne radiale s'étendant à partir du premier arbre ; et dans lequel la première région magnétisée du premier arbre et le premier capteur de champ magnétique se trouvent sur une ligne radiale s'étendant à partir du premier arbre.

4. Agencement de capteurs de couple selon l'une quelconque des revendications 1 à 3, dans lequel le premier capteur de champ magnétique (30) comprend une bobine de mesure et/ou dans lequel le second capteur de champ magnétique (31) comprend une bobine de mesure et/ou dans lequel l'élément de compensation (40) comprend une bobine de compensation.

5. Agencement de capteurs de couple selon l'une quelconque des revendications 1 à 4, dans lequel la première région magnétisée du premier arbre comprend deux sous-régions magnétisées qui sont magnétisées de manière contraire dans la direction circonférentielle, et le premier capteur de champ magnétique comprend deux bobines de mesure fournies pour la mesure d'un champ magnétique de la sous-région magnétisée respective.

6. Agencement de capteurs de couple selon la revendication 5, dans lequel l'élément de compensation comprend deux bobines de compensation permettant de compenser l'influence perturbatrice de la seconde région magnétisée sur la bobine de mesure respective.

7. Agencement de capteurs de couple selon la revendication 6, dans lequel chaque bobine de compensation est connectée en série à la bobine de mesure respective, et dans lequel chaque bobine de compensation est agencée à l'encontre de la bobine de mesure respective en termes de tension induite.

8. Agencement de capteurs de couple selon l'une quelconque des revendications 1 à 7, comprenant en outre un autre premier capteur de champ magnétique permettant de mesurer le champ magnétique généré par la première région magnétisée, dans lequel l'élément de compensation est prévu pour compenser l'influence perturbatrice de la seconde région magnétisée sur les deux premiers capteurs de champ magnétique.

9. Agencement de capteurs de couple selon la revendication 8, dans lequel l'élément de compensation est agencé de sorte que le champ magnétique généré par la seconde région magnétisée au niveau de la position de l'élément de compensation se situe dans la plage comprise entre 90% et 110% de la valeur moyenne des champs magnétiques générés par la seconde région magnétisée au niveau des positions des deux premiers capteurs de champ magnétique.

10. Procédé de détection du couple avec un agencement de capteurs de couple (100) selon l'une quelconque des revendications 1 à 9, dans lequel le procédé comprend les étapes consistant à :
mesurer le couple au niveau du premier arbre (10) avec le premier capteur de couple magnétoélastique (20, 30) ;
mesurer le couple au niveau du second arbre (11) avec le second capteur de couple magnétoélastique (21, 31) ; et
compenser au moins partiellement une influence perturbatrice de la seconde région magnétisée (21) du second arbre (11) sur la mesure de couple du premier capteur de couple (20, 30) avec le premier élément de compensation (40).
